# EUROPEAN PATENT SPECIFICATION

(11) **EP 2 965 324 B1**
(45) Date of publication and mention of the grant of the patent: **21.11.2018**
(21) Application number: 14705772.3
(22) Date of filing: 20.02.2014
(51) Int. Cl.: H01B 3/42, C08L 67/02

(54) **A POLYMERIC COVER AND A PART OF AN ELECTRICAL CABLE**
POLYMERABDECKUNG UND TEIL EINES ELEKTRISCHEN KABELS
COUVERCLE POLYMÉRIQUE ET PARTIE D'UN CÂBLE ÉLECTRIQUE

(30) Priority: 06.03.2013 EP 13157951
(43) Date of publication of application: 13.01.2016
(73) Proprietor: DSM IP Assets B.V., 6411 TE Heerlen (NL)
(72) Inventor: KEESTRA, Beert Jacobus, NL-6100 AA Echt (NL); SCHMIDT, Angelika, NL-6100 AA Echt (NL)
(74) Representative: DSM Intellectual Property
(86) International application number: PCT/EP2014/053298
(87) International publication number: WO 2014/135374

(56) References cited:
- EP-A1- 0 182 629
- EP-A1- 1 883 081
- US-A1- 2003 162 040

## Description

The invention relates to a polymeric cover of an electrical cable and a part of an electrical cable. Electrical cables are for example used to connect electrical appliances with a power source. Examples are cables for coffee machines, vacuum cleaners, but also computers. Electrical cables are also used for the charger of a mobile telephone. Still a further example of electrical cables are audio cables, for example the cables of ear phones. A cable may comprise two or more wires. The wires normally are covered with a polymeric layer, that services as an insulation. The cable contains a cover, surrounding the two or more wires.

Parts of electrical cables include a plug, a switch, or a strain relief. It is important that the cover of an electrical cable or electrical wire, or a part of an electrical cable is highly flexible and strong. This is especially important for thin cables, like cables for mobile telephones, ear phones, lab tops etc. Surprisingly a very flexible and yet strong cover for an electrical cable or electrical wire and a part of an electrical cable is obtained if the cover and the part are produced of a polymer composition comprising a thermoplastic copolyetherester elastomer comprising 75 - 85 wt.% soft segments derived from poly(tetrahydrofuran) diol (pTHF) having a number average molecular weight (Mn) of 2500 - 4000 kg/kmol.

A thermoplastic elastomer is a rubbery material with the processing characteristics of a conventional thermoplastic and below its melting or softening temperature the performance properties of a conventional thermoset rubber. Thermoplastic elastomers are described in Handbook of Thermoplastic Elastomers, second edition, Van Nostrand Reinhold, New York (ISBN 0-442-29184-1).

The thermoplastic copolyetherester elastomer suitably contains hard segments that are built up from repeating units derived from at least one alkylene diol and at least one aromatic dicarboxylic acid or an ester thereof. As alternative to segment, also the term block is being used. The alkylene diol may be a linear or a cycloaliphatic alkylene diol. The linear or cycloaliphatic alkylene diol contains generally 2-6 C-atoms, preferably 2-4 C-atoms. Examples thereof include ethylene glycol, propylene diol and butylene diol. Preferably propylene diol or butylene diol are used, more preferably 1,4-butylene diol. Examples of suitable aromatic dicarboxylic acids include terephthalic acid, 2,6-naphthalenedicarboxylic acid, 4,4'-biphenyldicarboxylic acid or combinations of these. The advantage thereof is that the resulting polyester is generally semi-crystalline with a melting point of above 150°C and preferably below 175°C. The hard segments may optionally further contain a minor amount of units derived from other dicarboxylic acids, for example isophthalic acid, which generally lowers the melting point of the polyester. The amount of other dicarboxylic acids is preferably limited to not more than 10 mol%, more preferably not more than 5 mol%, so as to ensure that, among other things, the crystallization behaviour of the copolyetherester is not adversely affected. The hard segment is preferably built up from ethylene terephthalate, propylene terephthalate, and in particular from butylene terephthalate as repeating units. Advantages of these readily available units include favourable crystallisation behaviour and a suitable melting point, resulting in copolyetheresters with good processing properties, excellent thermal and chemical resistance.

Soft segments of the copolyetherester are derived from poly(tetramethylene oxide)diol or poly(terahydrofuran)diol (pTHF) having a number average molecular weight (Mn) of between 2500 and 4000 kg/kmol. The value for Mn is normally provided by the supplier of the poly(terahydrofuran)diol and may be determined by GPC. Preferably the copolyeterester contains between 77 and 83 wt. % of poly(terahydrofuran)diol , more preferably between 78 and 82 wt. % of poly(terahydrofuran)diol. Preferably the poly(terahydrofuran)diol (pTHF) has a number average molecular weight (Mn) of between 2750 and 3750 kg/kmol Examples and preparation of copolyetheresters are for example described in Handbook of Thermoplastics, ed. O.Olabishi, Chapter 17, Marcel Dekker Inc., New York 1997, ISBN 0-8247-9797-3, in Thermoplastic Elastomers, 2nd Ed, Chapter 8, Carl Hanser Verlag (1996), ISBN 1-56990-205-4, in Encyclopedia of Polymer Science and Engineering, Vol. 12, Wiley & Sons, New York (1988), ISBN 0-471-80944, p.75-117, and the references cited therein.

The copolyetherester may comprise one or more further soft segments for example up to 30 wt.% of the copolyetherester, preferably up to 10 wt.% of soft segments derived from ethylene glycol or (polypropylene oxide).

Additives used in the polymer composition of the cover and the part may include antioxidants, dyes or pigments, UV absorbers, hydrolytic stabilizers, antistatic agents, fillers, lubricants.
The amount of further additives may be up to 10 wt. % of the composition, preferably up to 5 wt.%, more preferably up to 2 wt.%.

Preferably electrical cable according to the invention is a cable for consumer electronics, like cables for mobile telephones, ear phones and lab tops. For such a cable it is very important that the polymer composition of the insulation is flexible, but also strong, because of the low diameter of the cable.

In a further preferred embodiment the part is a strain relief. This is because the composition is flexible and yet strong. In this way a strain relief of the composition protects for example a plug, a switch or an ear bud against being broken from the cable.

### Examples

### Materials used:

1). Polyetherester compring polybutylene terephthalate hard segments and 82 wt.% of pTHF, having a number average molecular weight of 3000 kg/kmol.
2). Polyetherester compring polybutylene terephthalate hard segments and 79 wt.% of pTHF, having a number average molecular weight of 2900 kg/kmol.
   A). Polyetherester compring polybutylene terephthalate hard segments and 77 wt.% of pTHF, having a number average molecular weight of 2000 kg/kmol.
   B). Polyetherester compring polybutylene terephthalate hard segments and 70 wt.% of pTHF, having a number average molecular weight of 2000 kg/kmol.

The E-mod and the Tensile strength were measured according to ISO 527 using a tensile bar according to ISO 527-1BA.

The shore A was measured according to ISO 868.

The value for Mn of poly(tetrahydrofuran)diol has been determined by Size Exclusion Chromatography SEC. Standards of poly(tetrahydrofuran)diol were used to set up a conventional calibration line of Mn as function of retention volume against which the Mn of samples of poly(tetrahydrofuran)diol were measured. SEC equipment Viscotek GPC Max (System ID: LT-5) equipped with Agilent PL MixedE columns and Viscotek Triple Detector Array 302, including ultra-violet (UV), differential refractive index (RI), differential viscometer (DV) and right-angle light-scattering (RALS) detector was used. Poly(tetrahydrofuran)diol samples at concentration 4.5-5.5 mg/ml were eluted with hexafluoroisopropanol solvent at 35°C.

### Example 1, 2 and comparative experiments A and B.

From the above listed polyetheresters the E-modulus, the tensile strength (TS), the elongation at break and the shore A were measured. The results are given in table 1.

| Example | SB [%] | MWT SB [kg/kmol] | Emod [Mpa] | TS [Gpa] | EAB [%] | shore A [-] |
|---|---|---|---|---|---|---|
| I | 82 | 3000 | 8 | 16,6 | 850 | 72 |
| II | 79 | 2900 | 9 | 16,8 | 865 | 74 |
| | | | | | | |

| comparative example | | | | | | |
|---|---|---|---|---|---|---|
| A | 77 | 2000 | 12 | 12,4 | 750 | 78 |
| B | 70 | 2000 | 25 | 15 | 860 | 85 |

From the measurements presented in table 1 it is clear that the compositions tested in the examples are strong and yet flexible, and therefore highly suitable to be used as a cable cover or a part of a cable, for instance a strain relief.

## Claims

1. Cover for an electrical cable and a part of an electrical cables **characterised in that** the cover and the part consists of a polymer composition comprising a thermoplastic copolyetherester elastomer comprising 75 - 85 wt.% soft segments derived from poly(tetrahydrofuran) diol (pTHF) having a number average molecular weight (Mn) of 2500 - 4000 kg/kmol, measured according to Size Exclusion Chromatography as described in the examples.

2. Cover or part according to claim 1, wherein the copolyetherester contains a hard segment from polybutyleneterephtalate.

3. Cover or part according to claim 1 or 2, wherein thermoplastic copolyetherester elastomer comprises 77 - 83 wt.% pTHF.

4. Cover or part according to any one of claims 1 - 3, wherein the pTHF has a number average molecular weight of between 2750 and 3750 kg/kmol.

5. Part according to any one of claims 1 - 4, wherein the part is a strain relief.

## Patentansprüche

1. Mantel für ein Elektrokabel und Teil eines Elektrokabels, **dadurch gekennzeichnet, dass** der Mantel und das Teil aus einer Polymerzusammensetzung bestehen, die ein thermoplastisches Copolyethyerester-Elastomer umfassen, das 75-85 Gew.-% Weichsegmenten, die sich von Poly(tetrahydrofuran)diol (pTHF) mit einem zahlenmittleren Molekulargewicht (Mn) von 2500 bis 4000 kg/kmol, gemessen gemäß Größenausschlusschromatographie wie in den Beispielen beschrieben, umfasst.

2. Mantel oder Teil nach Anspruch 1, wobei der Copolyetherester ein Hartsegment aus Polybutylenterephthalat umfasst.

3. Mantel oder Teil nach Anspruch 1 oder 2, wobei das thermoplastische Copolyetherester-Elastomer 77-83 Gew.-% pTHF umfasst.

4. Mantel oder Teil nach einem der Ansprüche 1-3, wobei das pTHF ein zahlenmittleres Molekulargewicht zwischen 2750 und 3750 kg/mol aufweist.

5. Teil nach einem der Ansprüche 1-4, wobei es sich bei dem Teil um eine Zugentlastung handelt.

## Revendications

1. Gaine pour un câble électrique et partie d'un câble électrique, **caractérisées en ce que** la gaine et la partie sont constituées d'une composition polymère comprenant un élastomère de copolyétherester thermoplastique comprenant 75 à 85 % en poids de segments souples dérivés de poly(tétrahydrofurane)diol (pTHF) présentant une moyenne en nombre du poids moléculaire (Mn) de 2500 à 4000 kg/kmol, mesurée conformément à la chromatographie d'exclusion diffusion comme décrit dans les exemples.

2. Gaine ou partie selon la revendication 1, dans laquelle le copolyétherester contient un segment rigide issu de polybutylènetéréphtalate.

3. Gaine ou partie selon la revendication 1 ou 2, dans laquelle l'élastomère de copolyétherester thermoplastique comprend 77 à 83 % en poids de pTHF.

4. Gaine ou partie selon l'une quelconque des revendications 1 à 3, dans laquelle le pTHF présente une moyenne en nombre du poids moléculaire comprise entre 2750 et 3750 kg/kmol.

5. Partie selon l'une quelconque des revendications 1 à 4, la partie étant un manchon de protection.
